# EUROPÄISCHE PATENTSCHRIFT

(11) **EP 0 594 684 B1**
(45) Veröffentlichungstag und Bekanntmachung des Hinweises auf die Patenterteilung: **06.12.1995**
(21) Anmeldenummer: 92914714.8
(22) Anmeldetag: 06.07.1992
(51) Int. Cl.: A21C 5/00

(54) **VORRICHTUNG ZUM PORTIONIEREN VON TEIG**
DEVICE FOR PORTIONING DOUGH
DISPOSITIF DE DOSAGE DE PATE

(30) Priorität: 12.07.1991 AT 1411/91
(43) Veröffentlichungstag der Anmeldung: 04.05.1994
(73) Patentinhaber: König, Elisabeth, A-8045 Graz (AT)
(72) Erfinder: KÖNIG, Helmut, verstorben (AT)
(74) Vertreter: Wildhack, Helmut, Dipl.-Ing. Dr.
(86) Internationale Anmeldenummer: AT9200086
(87) Internationale Veröffentlichungsnummer: WO9300817

(56) Entgegenhaltungen:
- WO-A-90/11689
- AT-A- 376 107

## Beschreibung

Die Erfindung bezieht sich auf eine Vorrichtung zum Portionieren von Teig und gegebenenfalls auch zum Wirken der portionierten Teigstücke, mit einer durch einen Antrieb verdrehten Trommel, die an ihrem Umfang in gleichmäßigen Abständen voneinander verteilte Aufnahmeöffnungen hat, in die der Teig aus einem Einfüllschacht durch ein hin- und hergehendes Werkzeug, insbesondere einen Schieber, eingedrückt wird, wobei im Einfüllschacht eine Vorportioniereinrichtung für den Teig angeordnet ist, deren Antrieb von einem Fühler gesteuert wird, der auf die im Einfüllschacht unterhalb der Vorportioniereinrichtung befindliche Teigmenge anspricht, und wobei eine durch einen Antrieb angetriebene Bemehlungsvorrichtung vorgesehen ist, mit der Mehl auf den im Einfüllschacht unterhalb der Vorportioniereinrichtung befindlichen Teig verteilt wird.

Derart aufgebaute Maschinen sind unter der Bezeichnung "REX" im Handel. Die Vorportioniereinrichtung trennt von der in den Einfüllschacht eingebrachten Teigmenge Teilmengen ab und fördert diese Teilmengen in den untersten Bereich des Einfüllschachtes vor das hin- und hergehende Werkzeug, durch welches Teig aus dieser Teigmenge in die Aufnahmeöffnungen der umlaufenden Trommel eingedrückt wird. Sobald die unterhalb der Vorportioniereinrichtung vor dem hin- und hergehenden Werkzeug befindliche Teigmenge so gering wird, daß sie nur mehr für einen oder wenige Arbeitszyklen des Werkzeuges ausreicht, spricht der Fühler an und veranlaßt den Antrieb der Vorportioniereinrichtung zur Nachförderung einer neuen Teigteilmenge, die ihrerseits wieder den Fühler so beeinflußt, daß dieser die Teignachförderung wieder unterbricht. Die für den Eindrückvorgang in die Aufnahmeöffnungen der Trommel bereitgestellte Teigteilmenge wird durch die Bemehlungsvorrichtung mit Mehl bestreut, um sicherzustellen, daß sich die portionierten Teigstücke aus den Aufnahmeöffnungen wieder problemlos lösen. In der Regel sind hiezu in den Aufnahmeöffnungen Kolben verschiebbar gelagert, die an einer Ablagestelle die Teigstücke aus den Aufnahmeöffnungen ausstoßen. Hiebei sorgt die Bemehlung der Teigteilmenge dafür, daß der Teig an den Kolben nicht haften bleibt. Werden die portionierten Teigstücke in den Aufnahmeöffnungen auch rundgewirkt, so begünstigt die Bemehlung den Übergang des vom Wirkwerkzeug ergriffenen Teigstückes zur kugeligen Form.

Untersuchungen des Patentinhabers haben gezeigt, daß es bei der bekannten Ausführungsform gelegentlich zu unerwünscht starken Mehlkrusten auf den ausgewogenen bzw. gewirkten Teigstücken kommt. Auf der Suche nach der Ursache dafür hat sich gezeigt, daß diese unzulässig starken Mehlkrusten in erster Linie in Produktionsphasen auftreten, welche einem Betriebsstillstand oder einem Leerlauf der Maschine folgen. Als Ursache wurde erkannt, daß bei einem Leerlauf der Maschine die Bemehlungsvorrichtung weiter Mehl in den Einfüllschacht fördert, so daß die erste Teigteilmenge, welche nach dem Leerlauf von der Vorportioniereinrichtung dem Eindrückwerkzeug zugeführt wird, auf einen übermäßigen Mehlvorrat im Einfüllschacht trifft.

Die Erfindung setzt sich zur Aufgabe, diesen Nachteil zu vermeiden und eine einwandfreie Bemehlung in allen Betriebsphasen der Maschine sicherzustellen. Die Erfindung löst diese Aufgabe dadurch, daß ein Fühler für die Steuerung des Antriebes der Bemehlungsvorrichtung vorhanden ist, welcher diesen Antrieb in Abhängigkeit von der im Einfüllschacht unterhalb der Vorportioniereinrichtung befindlichen Teigmenge steuert. Auf diese Weise erfolgt der Bemehlungsvorgang in Abhängigkeit vom Volumen der für den Eindrückvorgang bereitgestellten Teigmenge, so daß die Einbringung von Mehl in den Einfüllschacht bzw. in den Portionierbereich desselben so lange unterbrochen wird, als die dort befindliche Teigmenge ein vorbestimmtes Maß unterschreitet. Der hiezu verwendete Fühler kann - wie dies für die Steuerung des Antriebes der Vorportioniereinrichtung bekannt ist - eine im Portionierbereich des Einfüllschachtes beweglich gelagerte Stange sein, die von dem vom Eindrückwerkzeug verdrängten Teig bei Vorhandensein einer ausreichenden Teigmenge hochgehoben wird und damit anzeigt, daß die im Portionierbereich befindliche Teigmenge genügend groß ist. Die erwähnte Bewegung der Stange unterbleibt, wenn die Teigmenge im Portionierbereich unter einen Grenzwert fällt. Zweckmäßig überwacht eine Elektronik, ob bei jedem Hub des Eindrückwerkzeuges ein auf die erwähnte Bewegung des Fühlers zurückzuführender Impuls vom Fühler abgegeben wird. Unterbleibt ein solcher Impuls, so wird - gegebenenfalls nach einer einstellbaren Verzögerungszeit - der Antrieb der Vorportioniereinrichtung so betätigt, daß diese Einrichtung Teig in den Portionierbereich nachfördert. Es kann jedoch der Fühler auch eine Lichtschranke, ein auf die Annäherung feuchter Masse ansprechender kapazitiver Fühler od.dgl. sein.

Gemäß einer bevorzugten Ausführungsform der Erfindung ist ein einziger Fühler vorhanden, welcher sowohl den Antrieb der Vorportioniereinrichtung als auch den Antrieb der Bemehlungseinrichtung steuert. Auf diese Weise wird der Aufwand auf einen einzigen Fühler reduziert. Dieser Fühler muß die Vorportioniereinrichtung und die Bemehlungseinrichtung jedoch nicht gleichzeitig ein- bzw. ausschalten, vielmehr besteht durchaus die Möglichkeit, etwa mittels einer geeigneten Elektronik, die Ein- und Ausschaltzeitpunkte nach Belieben bzw. in Abhängigkeit von den vorliegenden Erfordernissen, etwa der Teigqualität, zu wählen. Hiezu kann es im Rahmen der Erfindung vorteilhaft sein, wenn der Antrieb für die Bemehlungsvorrichtung eine Kupplung, vorzugsweise eine Magnetkupplung, aufweist, die vom Fühler, vorzugsweise über ein einstellbares Verzögerungsglied, gesteuert wird.

Weitere Kennzeichen und Vorteile ergeben sich aus der Beschreibung eines Ausführungsbeispieles der Erfindung, das in der Zeichnung schematisch dargestellt ist. Fig.1 zeigt einen Vertikalschnitt durch die Vorrichtung. Fig.2 ist eine Ansicht des Trommelantriebes, von der anderen Seite der Maschine her gesehen, Fig.3 ist ein Vertikalschnitt durch den Einfüllschacht nach der Linie III-III der Fig. und Fig.4 ist eine Detailansicht auseinandergenommener Einzelteile.

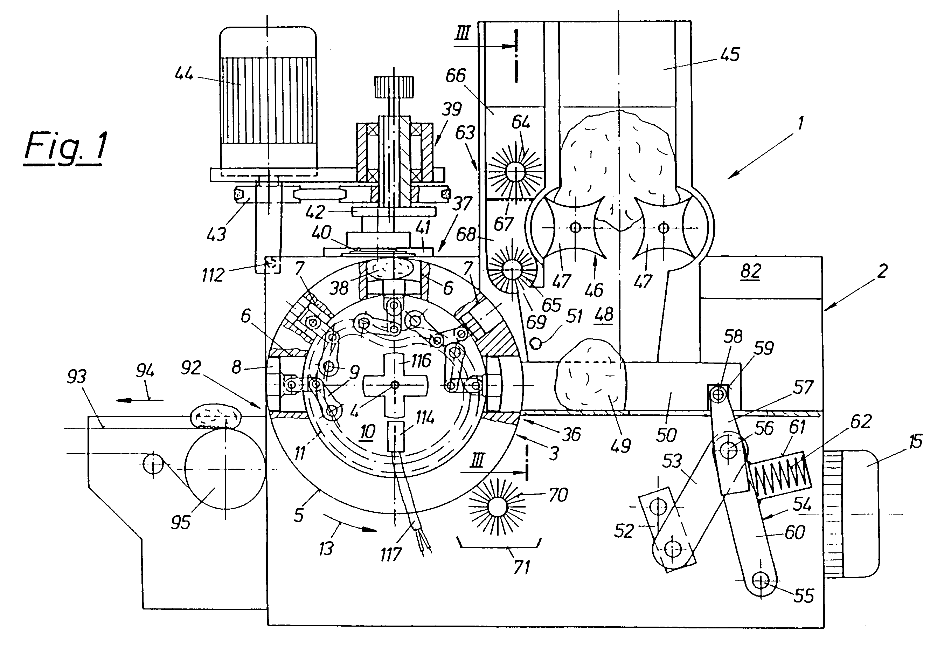

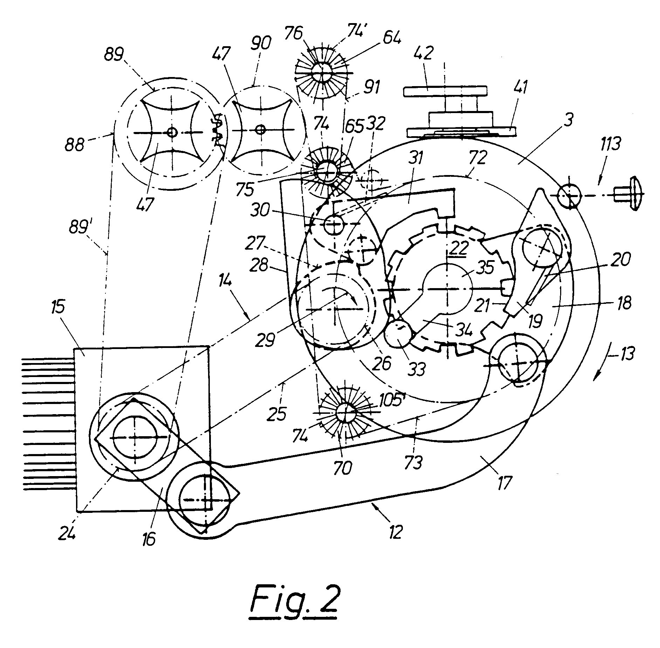

Die Vorrichtung 1 dient zum Portionieren und Wirken von Teigstücken. Die Vorrichtung 1 hat ein Gestell 2, in welchem eine Trommel 3 um eine horizontale Achse 4 drehbar gelagert ist. Diese Trommel 3 ist an ihrem Umfang 5 mit in gleichmäßigen Abständen voneinander angeordneten Aufnahmeöffnungen 6,7 für den zu portionierenden und zu wirkenden Teig versehen, welche Öffnungen 6,7 zweckmäßig in Form von sich in Richtung der Trommelachse 4 erstreckenden Reihen am Trommelumfang 5 vorgesehen sind, im vorliegenden Fall jeweils zwei Öffnungen 6,7 pro Reihe. Die Öffnungen 6 sind größer als die Öffnungen 7, so daß Teigportionen unterschiedlicher Größe bzw. unterschiedlichen Gewichtes ausgewogen und gewirkt werden können. Die Öffnungen 6 sind alternierend mit den Öffnungen 7 angeordnet, im vorliegenden Fall jeweils vier Öffnungen 6 und vier Öffnungen 7, jedoch kann auch eine andere Öffnungsanzahl bzw. Anordnung gewählt werden, insbesondere können alle Aufnahmeöffnungen gleiche Größe und Form haben. In jeder Aufnahmeöffnung 6,7 ist ein Kolben 8 in radialer Richtung geführt, der mittels eines Gestänges 9 in der Öffnung 6,7 je nach der Drehstellung der Trommel 3 vor- bzw. zurückgeschoben wird. Hiezu dient zumindest eine Kurvenscheibe 10, in bzw. an deren Kurvenbahn 11 das Gestänge 9 so geführt ist, daß die erwähnte Radialbewegung der Kolben 8 in den Öffnungen 6 bzw.7 erzielt wird, wenn die Kurvenscheibe 10 relativ zur Trommel 3 verdreht wird. Hiezu wird die Trommel 3 durch einen Antrieb 12 (Fig.2) schrittweise in Richtung des Pfeiles 13 weitergedreht und hiebei die Kurvenscheibe 10 mitgedreht. In den Pausen der schrittweisen Trommelbewegung wird die Kurvenscheibe 10 wieder durch einen gesonderten Antrieb 14 in die Ausgangslage zurückgedreht. Der Antrieb 12 für den Trommelvorschub hat eine vom Hauptmotor 15 angetriebene Kurbel 16, mit der das eine Ende einer Pleuelstange 17 gelenkig verbunden ist, deren anderes Ende an einer Platte 18 angelenkt ist, die auf die Welle der Trommel 3 drehbar aufgesetzt ist. Auf der Platte 18 ist eine Klinke 19 schwenkbar gelagert, die durch eine Feder 20 bei der Rückzugbewegung der Pleuelstange 17 (Trommelvorschub im Sinne des Pfeiles 13) in eine Rast 21 einer Zahnscheibe 22 gedrückt wird, die mit der Trommelwelle drehschlüssig verbunden ist. Der Antrieb 14 für die Kurvenscheiben 10 hat ein von der Abtriebswelle 23 des Motors 15 angetriebenes Kettenrad 24, das über eine Kette 25 ein im Gestell 2 gelagertes Kettenrad 26 antreibt, das mit einer Nocke 27 und einer weiteren Kurvenscheibe 28 drehschlüssig verbunden ist, welche beiden Bauteile 27,28 um die Achse des Kettenrades 26 in Richtung des Pfeiles 29 umlaufen. Die Nocke 27 wirkt mit einer im GBestell um eine Achse 30 gelagerten Klinke 31 zusammen, die durch eine Feder 32 gegen die Zahnscheibe 22 gedrückt wird. Die Kurvenscheibe 28 wirkt mit ihrem Umfang auf eine Rolle 33, die an einem Schwenkhebel 34 drehbar gelagert ist, der auf einer Welle 35 fest sitzt, die innerhalb der Trommelwelle verläuft und auf der die Kurvenscheiben 10 drehschlüssig befestigt sind. Zwischen der nicht dargestellten Welle der Trommel 3 und der Welle 35 der Kurvenscheiben 10 ist eine nicht dargestellte Kupplung derart vorhanden, daß die Kurvenscheiben 10 beim Vorschub der Trommel 3 (Pfeil 13) um den gleichen Verdrehwinkel mitgenommen werden. Sobald dieser Trommelvorschub beendet ist, bewirkt die Nocke 27, daß die Klinke 31 in die Zahnscheibe 22 einrastet, wodurch die Trommel 3 gegen Verdrehung gesichert wird. Die umlaufende Kurvenscheibe 28 bewirkt nun eine Verschwenkung des Schwenkhebels 34 und damit der Welle 35, wodurch die Kurvenscheiben 10 wieder in die Ausgangslage zurückgeführt werden. Die Umfangsform der Kurvenscheibe 28, welche mit der Rolle 33 zusammenwirkt, bestimmt die Geschwindigkeit der Verschwenkung des Schwenkhebels 34 und damit die Geschwindigkeit des Vorschubes bzw. der Rückziehbewegung der Kolben 8 in den Aufnahmeöffnungen 6 bzw. 7, unabhängig von der Bewegung und der Lage der Trommel 3. Auf diese Weise ist es möglich, die Kolben 8 an einer Portionierstelle 36 (Fig.1) zurückzuziehen und durch die damit hervorgerufene Ansaugung die Einfüllung des Teiges in die Aufnahmeöffnung zu begünstigen. Der Grad der Zurückziehung der Kolben 8 während des Portioniervorganges bestimmt das Volumen des von der jeweiligen Aufnahmeöffnung aufgenommenen Teigstückes.

An einer relativ zur Portionierstelle 36 um 90° versetzten, im Bereiche des oberen Scheitels der Trommel 3 angeordneten Wirkstelle 37 werden die in den Aufnahmeöffnungen 6 bzw. 7 befindlichen Teigstücke 38 rundgewirkt, wofür ein oberhalb der Trommel 3 angeordnetes Wirkwerkzeug 39 vorgesehen ist. Dieses Werkzeug hat eine in bekannter Weise mit stufenförmig abgesetzten Vertiefungen 40 versehene Platte 41, die durch einen Exzenterantrieb 42 in kreisende Bewegung versetzt wird, wodurch das in der jeweiligen Aufnahmeöffnung 6 bzw. 7 befindliche Teigstück 38 in die ballige Form übergeführt wird. Der Exzenterantrieb 42 wird über ein Riemengetriebe 43 von einem Motor 44 angetrieben.

Der an der Portionierstelle 36 zu portionierende Teig wird in einen Einfüllschacht 45, der als Trichter ausgebildet sein kann, eingefüllt und dort vorportioniert. Hiezu dient eine Vorportioniereinrichtung 46 in Form zweier um norizontale Achsen parallel zueinander drehbar gelagerter Sternwalzen 47, die mit einander entgegengesetzten Drehrichtungen umlaufen, derart, daß der Teig aus dem Einfüllschacht 45 portionenweise in eine unterhalb der Sternwalzen 47 befindliche Kammer 48 gefördert wird, aus welcher der Teig aus der vorportionierten Menge 49 durch einen Schieber 50 in die Aufnahmeöffnungen 6 bzw.7 eingedrückt wird. Die Sternwalzen 47 laufen jedoch nicht kontinuierlich um, sondern sie sind intermittierend angetrieben, wobei dieser Antrieb von einem Fühler 51 in Abhängigkeit vom in der Kammer 48 befindlichen Teigvolumen gesteuert wird. Dieser Fühler 51 kann von einer Lichtschranke gebildet sein, deren Lichtstrahl von der durch den Schieber 50 verdrängten Teigmenge 49 abgeschattet wird. Solange dies beim Vorgehen des Schiebers 50 der Fall ist, erfolgt kein Antrieb der Sternwalzen 47 und diese sperren mit ihren einander zugewendeten Armen den Teigdurchgang aus dem Einfüllschacht 45 in die Kammer 48 ab, so daß kein Teig unbeabsichtigt nachrinnen kann. Wird hingegen die in der Kammer 48 vor dem Schieber 50 befindliche Teigmenge 49 zu klein, so wird ihre Verdrängung nicht mehr hinreichend groß, um den Fühler 51 zu betätigen, so daß - gegebenenfalls nach einer einstellbaren Verzögerungszeit - der Antrieb der Sternwalzen 47 so in Gang gesetzt wird, daß diese Sternwalzen Teig in die Kammer 48 nachfördern. Dies kann so erfolgen, daß die Sternwalzen 47 für eine vorbestimmte Zeit umlaufen, welche ausreicht, um genügend Teig wieder in der Kammer 48 vor dem Schieber 50 zur Verfügung zu stellen, worauf die Sternwalzen 47 wieder stillgesetzt werden. Es kann jedoch auch so vorgegangen werden, daß die Nachförderung von Teig in die Kammer 48 so lange erfolgt, bis der Fühler 51 wieder anspricht, worauf die Sternwalzen 47 stillgesetzt werden und zwar so, daß ihre Arme den Teigdurchgang in die Kammer 48 absperren. Der Fühler 51 kann auch ein mechanischer oder auf die Annäherung feuchter Masse ansprechender kapazitiver Fühler sein, z.B. eine in der Kammer 48 oberhalb der Bewegungsbahn des Schiebers 50 angeordnete bewegliche Stange, die vom durch den Schieber 50 verdrängten Teil 49 hochgehoben wird und dadurch anzeigt, daß in der Kammer 48 genügend Teig vorhanden ist. Unterbleibt diese Hochhebung der Stange, so wird Teig nachgefördert.

Für den Antrieb des Schiebers 50 ist eine vom Hauptmotor 15 angetriebene Kurbel 52 vorgesehen, die über eine Pleuelstange 53 gelenkig mit einem zweiteiligen Schwenkhebel 54 verbunden ist, der um eine Achse 55 schwenkbar im Gestell 2 gelagert ist. Die beiden Teile des Schwenkhebels 54 sind miteinander um die Anlenkachse 56 der Pleuelstange 53 schwenkbar verbunden und der obere Teil 57 des Schwenkhebels 54 ist mit dem Schieber 50 verbunden, und zwar ist eine von ihm getragene Rolle 58 in eine seitliche Ausnehmung 59 des Schiebers eingesetzt, welche Ausnehmung 59 auch nach unten offen ist, so daß der Hebelteil 57 eingreifen kann. Der Zweck dieser Ausnehmung wird später beschrieben. Am unteren Teil 60 des Schwenkhebels 54 ist ein Gehäuse 61 für eine Zugfeder 62 befestigt, deren eines Ende am Boden des Gehäuses 61, und deren anderes Ende am unteren Ende des Teiles 57 des Schwenkhebels 54 befestigt sind. Diese Feder 62 bewirkt ein Nachgeben des Antriebes des Schiebers 50, wenn sich vor diesem zuviel Teig in der Kammer 48 befindet. Dadurch wird eine übermäßige Teigquetschung vermieden.

Der in die Aufnahmeöffnungen 6 bzw.7 einzudrückende Teig wird in form der in der Kammer 48 befindlichen Teigmenge 49 durch eine Bemehlungsvorrichtung 63 mit Mehl bestäubt. Die Bemehlungsvorrichtung befindet sich, als Ganzes gesehen, auf der Höhe der Vorportioniereinrichtung 46, bringt jedoch das Mehl in den darunter befindlichen Teil des Einfüllschachtes 45, nämlich in die Kammer 48 ein, und zwar auf der der Trommel 3 benachbarten Seite dieser Kammer 48, so daß vorwiegend jener Bereich der darin befindlichen Teigmenge 49 bemehlt wird, welcher beim darauffolgenden Hub des Schiebers 50 in die Aufnahmeöffnungen 6 bzw. 7 eingedrückt wird. Damit wird erreicht, daß eine bemehlte Teigoberfläche auf die Stirnfläche der Kolben 8 gelangt, so daß die in den Aufnahmeöffnungen 6,7 befindliche Teigportion nicht an den Kolben 8 hängen bleibt. Hiezu hat die auf der der Trommel 3 zugewendeten Seite der Vorportioniereinrichtung 46 angeordnete Bemehlungsvorrichtung 63 eine höher als die Sternwalzen 47 angeordnete Dosierbürste 64 und eine tiefer als die Sternwalzen 47 angeordnete Verteilerbürste 65 für das Mehl. Die Dosierbürste 64 ist in einer seitlich des Einfüllschachtes 45 liegenden Mehlkammer 66 drehbar gelagert und streift mit ihren Bürsten über einen Gitterboden 67, dessen Gitteröffnungen hinsichtlich ihrer Größe bzw. Anzahl veränderbar sind, so daß bei laufender Dosierbürste 64 mehr oder weniger Mehl durch die Öffnungen des Gitterbodens 67 in eine darunter befindliche Kammer 68 gefördert wird. Dieses Mehl wird von der in dieser Kammer 68 drehbar gelagerter Verteilerbürste 65 aufgefangen und durch eine Öffnung 69 des Bodens der Kammer 68 in die Kammer 48 geschleudert. Der Gitterboden 67 besteht zweckmäßig aus zwei relativ zueinander verschiebbaren Platten, die beide mit Öffnungen versehen sind, wobei die Verschiebung eine Veränderung der wirksamen Öffnungsgröße bewirkt.

Ferner ist am unteren Umfang der Trommel 3 eine umlaufende Reinigungsbürste 70 angeordnet, welche an der Trommel 3 anhaftende Teigreste abstreift. Diese Teigreste fallen auf eine im Gestell 2 gehaltene Auffangtasse 71.

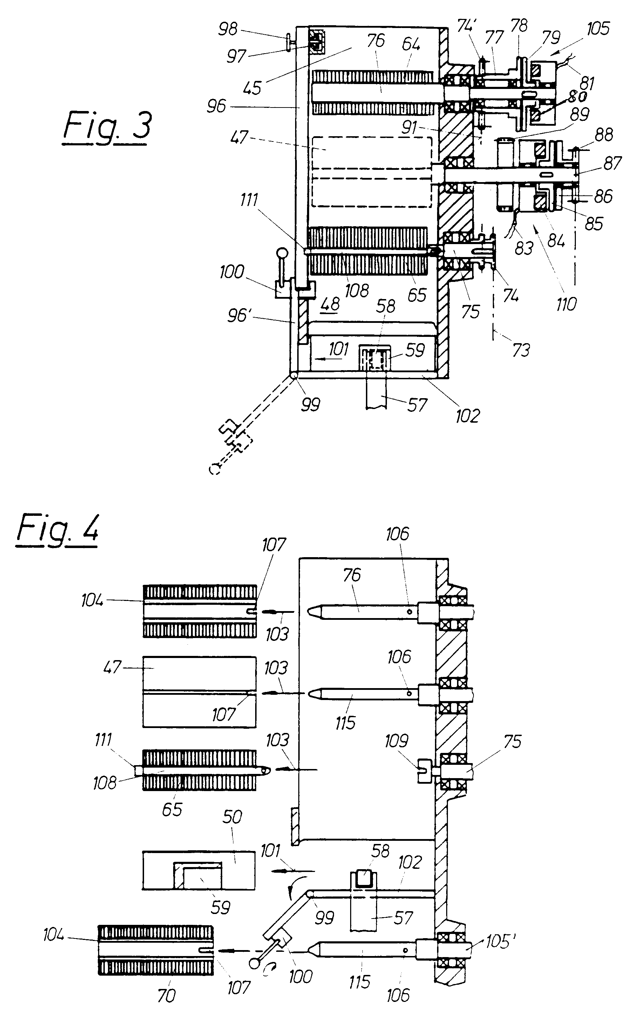

Der Antrieb der Bürsten 64,65,70 erfolgt von einem auf die Welle 35 der Trommel 3 aufgekeilten Kettenrad 72 (Fig.2), das eine Kette 73 antreibt, die über Kettenräder 74 geführt ist, die auf den Antriebswellen 75 bzw. 105 der Verteilerbürste 65 bzw. der Reinigungsbürste 70 drehschlüssig befestigt sind. Die Verteilerbürste 65 und die Reinigungsbürste 70 laufen also um, sobald und solange die Trommel 3 gedreht wird. Ein der Dosierbürste 64 zugeordnetes Kettenrad 74' (Fig.2,3) ist hingegen mit einer auf der Antriebswelle 76 der Dosierbürste 64 drehbar aufgesetzten Hülse drehschlüssig verbunden, die einen Kupplungsteil einer Magnetkupplung 105 (Fig.3) bildet, der mit einem Kupplungsbelag 78 versehen ist, gegen den ein zweiter Kupplungsteil 79 gedrückt werden kann, der mit der Antriebswelle 76 drehschlüssig verbunden ist. Die nötige Andrückung wird durch das elektrische Feld einer Wicklung 80 der Magnetkupplung 105 hervorgerufen, die drehbar auf die Welle aufgesetzt ist. Der Antrieb des Kettenrades 74' der Dosierbürste 64 erfolgt über eine Kette 91 (Fig.2) von einem weiteren, auf die Antriebswelle 75 der Verteilerbürste 65 drehschlüssig aufgesetzten Kettenrad 74'. Die Drehung der Dosierbürste 64 wird daher über die Magnetkupplung 105 gesteuert. Ihre Wicklung 80 ist mittels eines Kabels 81 mit einem Steuergerät 82 (Fig.1) im Gestell 2 verbunden, an welches auch der Fühler 51 angeschlossen ist. Ferner ist an dieses Steuergerät ein weiteres Kabel 83 angeschlossen, das zu einer weiteren Wicklung 84 führt, die in analoger Weise eine zwei Kupplungsteile 85,86 aufweisende Magnet-Kupplung 110 betätigt, von welchen Teilen der Teil 85 drehschlüssig mit der Antriebswelle 87 einer der Sternwalzen 47 verbunden ist, wogegen der andere Teil 86 drehbar auf dieser Welle 87 sitzt und mit einem Kettenrad 88 verbunden ist, das über eine Kette 89' vom Kettenrad 24 (Fig.2) angetrieben wird. Auf der Antriebswelle 87 sitzt ferner drehfest ein Zahnrad 89, das mit einem auf der Antriebswelle der anderen Sternwalze 47 sitzenden weiteren Zahnrad 90 (Fig.2) kämmt. Dadurch werden die beiden Sternwalzen 47 zu gegensinniger Umlaufbewegung angetrieben.

Der an das Steuergerät 82 angeschlossene Fühler 51 steuert somit - in Abhängigkeit vom Teigvolumen in der Kammer 48 - sowohl den Antrieb der Vorportioniereinrichtung 46 als auch den Antrieb der Bemehlungsvorrichtung 63. Dadurch ist nur ein einziger Fühler hiefür erforderlich, es könnten jedoch auch zwei gesonderte Fühler für die beiden Vorrichtungen vorgesehen sein. Zweckmäßig ist im Steuergerät 82 ein einstellbares Verzögerungsglied vorhanden, welches den Antrieb der Bemehlungsvorrichtung 63 mit einer einstellbaren Verzögerungszeit nach Ansprechen des Fühlers 51 im Sinne einer zu geringen Teigmenge in der Kammer 48 stillsetzt. Es erfolgt also die Ausschaltung der Bemehlungsvorrichtung 63 erst nach einer einstellbaren Anzahl von Hüben des Schiebers 50. Dies hat seinen Grund darin, daß dadurch eine noch in der Kammer 48 befindliche Restteigmenge bemehlt in die Aufnahmeöffnungen 6 bzw. 7 gedrückt wird, bevor die Abschaltung der Bemehlungsdvorrichtung 63 erfolgt. Dies ist günstig am Ende des Arbeitsprozesses der Vorrichtung, bevor diese abgeschaltet wird.

Zweckmäßig gibt der Fühler 51 seine Meldesignale impulsweise ab, und zwar im Takt der Bewegung des Schiebers 50. Diese Synchronisation kann in einfacher, bekannter Weise im Steuerhgerät 82 erfolgen.

Die fertig gewirkten Teigstücke 38 werden an einer Auswerfstelle 92 (Fig.1) durch die nach außen geschobenen Kolben 8 aus den Aufnahmeöffnungen 6 bzw. 7 ausgeworfen und gelangen auf ein Förderband 93, das die Teigstücke von der Vorrichtung 1 zur nächsten Bearbeitungsstation, etwa in einen Gärschrank abtransportiert. Um eine sichere Übergabe der Teigstücke aus den Aufnahmeöffnungen 6 bzw. 7 auf das Förderband 93 zu erreichen, ist letzteres mit Vorlauf angetrieben, d.h. es setzt sich sich in Richtung des Pfeiles 94 in Bewegung, bevor noch die Auswärtsbewegung der Kolben 8 beginnt. Dadurch wird das ausgeworfene Teigstück sicher von der Trommel 3 weggezogen. Statt dessen kann an der Übergabestelle, d.h. zwischen Trommel 3 und der das Förderband 93 im Trommelbereich umgelenkten Walze 95 auch eine nicht dargestellte umlaufende Übergabewalze vorhanden sein.

Um die Reinigung der teigführenden Teile der Vorrichtung 1, insbesondere der Bauteile im Einfüllschacht 45, zu erleichtern, sind diese Bauteile nach Abnahme von Seitenwänden alle nach der gleichen Richtung ausbaubar. Hiezu ist die der Bedienungsseite der Vorrichtung 1 zugewandte Wand 96 (Fig.3) des Einfüllschachtes 45 abnahmbar, im Normalbetrieb ist sie durch Steckbolzen 97 gehalten und durch eine Arretierung 98 fixiert. In analoger Weise ist weiter unten ein Teil 96' der Wand um eine horizontale Achse 99 aus der mit vollen Linien dargestellten Betriebsstellung in eine strichliert dargestellte Reinigungsstellung schwenkbar. Im Betrieb ist dieser Wandteil 96' durch eine Arretierung 100 gehalten. In der abgeschwenkten Stellung der Wand 96' ist der Schieber 50 in Richtung des Pfeiles 101 (siehe auch Fig.4) aus der Kammer 48 herausziehbar, wobei der Schieber auf der Bodenwand 102 gleitet. Die Kupplung des Schiebers 50 mit dem ihn antreibenden Teil 57 des Schwenkhebels 54 wird hiebei gelöst, was durch die früher erwähnte Ausnehmung 59 möglich ist, aus der die Rolle 58 herausgleitet. In analoger Weise sind die Bürsten 64,65 und 70 in Richtung der Pfeile 103 (Fig.4) nach Abnahme der Wand 96 aus dem Einfüllschacht 45 bzw. nach Abschwenkung des Wandteiles 96' herausziehbar, ebenso die Sternwalzen 47. Um dies zu ermöglichen, können diese Bürsten bzw. Walzen entweder, wie dies für die Bürsten 64,70 und die Sternwalzen 47 in Fig.4 dargestellt ist, mittels Hülsen 104 auf Antriebswellen 115' aufgesteckt sein, wobei die Mitnahme durch von diesen Wellen 105' radial abstehende Zapfen 106 erfolgt, die in Schlitze 107 der Hülsen 104 eingreifen. Ein nicht dargestellter Schnappverschluß kann hiebei das ungewollte Abziehen der Bürsten bzw. Walzen verhindern. Es kann jedoch auch, wie dies für die Verteilerbürste 65 dargestellt ist, die Anordnung so getroffen sein, daß die Bürste (bzw. die Sternwalze) auf einer Welle 103 sitzt, die mittels einer drehschlüssigen Steckverbindung 109 an die Antriebswelle 75 anschließbar ist. Hiebei kann ein Zapfen 111 (Fig.3) der Welle 108 in der Wand 96 gelagert sein. Fig.4 zeigt die Bauteile im auseinandergenommenen Zustand. Ähnliche Abzugsmöglichkeiten können für das die Kolben 8 bewegende Gestänge 9 bzw. für die Kolben 8 selbst vorgesehen sein.

Um die Trommel 3 für Reinigungszwecke od.dgl. leichter zugänglich zu machen, ist das Wirkwerkzeug 39 um eine horizontale Achse 112 (Fig.1) von der Trommel 3 wegschwenkbar.

Um nach Wahl entweder die größeren Aufnahmeöffnungen 6 oder die kleineren Aufnahmeöffnungen 7 wirksam zu machen, dient eine Umschaltvorrichtung 113 (Fig.2), mit welcher die Klinke 19 ausgerückt werden kann, derart, daß beim Vorschub der Pleuelstange 17 die Klinke 19 (Fig.2) erst in die nächste, um 45°versetzte Rast 21 einrastet. Mittels eines elektromagnetischen Fühlers 114, der mit einem auf der Welle 35 der Trommel 3 aufgesetzten Geberkreuz 116 zusammenwirkt, kann die jeweils eingestellte Öffnungsgröße abgefühlt und über ein Kabel 117 an eine Auswertungsschaltungs und über diese an ein Display gemeldet werden.

## Patentansprüche

1. Vorrichtung zum Portionieren von Teig und gegebenenfalls auch zum Wirken der portionierten Teigstücke, mit einer durch einen Antrieb (12) verdrehten Trommel (3), die an ihrem Umfang (5) in gleichmäßigen Abständen voneinander verteilte Aufnahmeöffnungen (6,7) hat, in die der Teig aus einem Einfüllschacht (45) durch ein hin- und hergehendes Werkzeug, insbesondere einen Schieber (50), eingedrückt wird, wobei im Einfüllschacht (45) eine Vorportioniereinrichtung (46) für den Teig angeordnet ist, deren Antrieb von einem Fühler (51) gesteuert wird, der auf die im Einfüllschacht (45) unterhalb der Vorportioniereinrichtung (46) befindliche Teigmenge anspricht, und wobei eine durch einen Antrieb angetriebene Bemehlungsvorrichtung (63) vorgesehen ist, mit der Mehl auf den im Einfüllschacht (45) unterhalb der Vorportioniereinrichtung (46) befindlichen Teig verteilt wird, dadurch gekennzeichnet, daß ein Fühler (51) für die Steuerung des Antriebes der Bemehlungsvorrichtung (63) vorhanden ist, welcher diesen Antrieb in Abhängigkeit von der im Einfüllschacht (45) unterhalb der Vorportioniereinrichtung (46) befindlichen Teigmenge steuert.

2. Vorrichtung nach Anspruch 1, dadurch gekennzeichnet, daß ein einziger Fühler (51) vorhanden ist, welcher sowohl den Antrieb der Vorportioniereinrichtung (46) als auch den Antrieb der Bemehlungsvorrichtung (63) steuert.

3. Vorrichtung nach Anspruch 1 oder 2, dadurch gekennzeichnet, daß der Fühler (51) den Antrieb der Bemehlungsvorrichtung (63) bei Vorliegen einer für mehrere Hübe des Werkzeuges, insbesondere des Schiebers (50), nicht ausreichenden Teigmenge mit einer, vorzugsweise einstellbaren, Verzögerung abschaltet.

4. Vorrichtung nach einem der Ansprüche 1 bis 3, dadurch gekennzeichnet, daß der Antrieb für die Bemehlungsvorrichtung (63) eine Kupplung(105), vorzugsweise eine Magnetkupplung, aufweist, die vom Fühler (51), vorzugsweise über ein einstellbares Verzögerungsglied, gesteuert wird.

5. Vorrichtung nach Anspruch 4, dadurch gekennzeichnet daß die Bemehlungsvorrichtung (63) zumindest eine drehbare Bürste (64) für die Mehlbewegung aufweist, deren Antriebswelle (76) unter Zwischenschaltung der Kupplung (105) von der Trommel (3) bzw. deren Antrieb im Takt der schrittweisen Trommelbewegung angetrieben ist.

6. Vorrichtung nach Anspruch 5, dadurch gekennzeichnet, daß auf der Welle (35) der Trommel (3) ein Kettenrad (72) befestigt ist, über das eine Kette (73) läuft, die, vorzugsweise über eine weitere Kette (91), ein auf die Antriebswelle (76) der Bürste (64) drehbar aufgesetztes Kettenrad (74) antreibt, das mit einem Kupplungsteil (77) der Kupplung (105) verbunden ist, wogegen der andere Kupplungsteil (79) mit der Antriebswelle (76) der Bürste (64) drehschlüssig verbunden ist.

7. Vorrichtung nach Anspruch 6, dadurch gekennzeichnet, daß die Bemehlungsvorrichtung (63) zwei übereinander angeordnete, um horizontale Achsen umlaufende Bürsten (64,65) hat, von denen die obere eine Dosierbürste (64), die untere eine Verteilerbürste (65) für das Mehl ist, wobei die Welle (75) der Verteilerbürste (65) mittels der Kette (73) vom Kettenrad (72) der Trommel (3) angetrieben ist und ein auf ihr fixes Kettenrad (74) trägt, das über eine weitere Kette (91) das drehbar auf der Antriebswelle der Dosierbürste sitzende Kettenrad (74') antreibt.

8. Vorrichtung nach Anspruch 7, dadurch gekennzeichnet, daß unterhalb der Dosierbürste (64) ein Gitterboden (67) liegt, dessen Gitteröffnungen hinsichtlich ihrer Größe und bzw. oder Anzahl veränderbar sind.

9. Vorrichtung nach einem der Ansprüche 1 bis 8, dadurch gekennzeichnet, daß die Bemehlungsvorrichtung (63) auf der Höhe der von zwei parallel zueinander im Einfüllschacht (45) liegenden Sternwalzen (47) gebildeten Vorportioniereinrichtung (46) angeordnet ist, welche Sternwalzen (47) mit ihren Achsen parallel zur Achse der Trommel (3) liegen, mit ihren Armen den Teig abschneiden und hinsichtlich ihrer intermittierenden Drehbewegung vom Fühler (51) in Abhängigkeit vom Teigvolumen unterhalb der Sternwalzen (47) gesteuert werden, wobei die Bemehlungsvorrichtung (63) auf der der Trommel (3) zugewandten Seite dieser Sternwalzen (47) liegt, vorzugsweise mit der Dosierbürste (64) höher, mit der Verteilerbürste (65) tiefer als die Sternwalzen (47).

10. Vorrichtung nach einem der Ansprüche 7 bis 9, dadurch gekennzeichnet, daß die Bürsten (64,65) und die Sternwalzen (47) mittels Steckverbindungen an ihre Antriebe angeschlossen sind und jeweils nach der gleichen Richtung aus dem Einfüllschacht (45) nach Abnahme einer Wand (96) desselben herausziehbar sind.

## Claims

1. An apparatus for portioning dough and optionally also for kneading the portioned dough pieces, comprising a drum (3) rotated by drive means (12) and having at its periphery (5) receiving openings (6, 7) distributed at uniform distances from each other, into which the dough from a filler run (45) is pressed in by a reciprocating tool, particularly a pusher (50), with a preportioning device (46) for the dough being arranged within said filler run (45), whose drive is controlled by a sensor (51) responsive to the amount of dough situated within the filler run (45) below the preportioning device (46), and comprising a flouring means (63) driven by a driving arrangement to distribute flour onto the dough which is situated within the filler run (45) below the preportioning device (46), characterized in that a sensor (51) for controlling said driving arrangement of the flouring means (63) is provided controlling the driving arrangement as a function of the amount of dough situated within the filler run (45) below the preportioning device (46).

2. Apparatus as claimed in claim 1, characterized in that a single sensor (51) is provided which controls both the drive of the preportioning device (46) and the driving arrangement of the flouring means (63).

3. Apparatus as claimed in claim 1 or 2, characterized in that the sensor (51) switches off the driving arrangement of the flouring means (63) in case of an insufficient amount of dough for a plurality of strokes of said tool, particularly of said pusher (50), with a, preferably adjustable, delay.

4. Apparatus as claimed in any of claims 1 to 3, characterized in that the driving arrangement of the flouring means (63) comprises a clutch (105), preferably a magnetic clutch, controlled by the sensor (51), preferably via an adjustable delaying member.

5. Apparatus as claimed in claim 4, characterized in that the flouring means (63) comprises at least one rotatable brush (64) for moving the flour, the driving shaft (76) of which being driven by said drum (3) or its drive means in time with the intermittent movement of the drum, with the clutch (105) being interposed.

6. Apparatus as claimed in claim 5, characterized in that a chain wheel (72) is fastened to the shaft (35) of the drum (3), and a chain (73) is running thereover, which drives, preferably via a further chain, a chain wheel (74) that is rotatably places onto the drive shaft (76) of the brush (64) and which is connected to one clutch part (77) of said clutch (105) while the other clutch part (79) is connected with the drive shaft (76) of the brush (64) for common rotation.

7. Apparatus as claimed in claim 6, characterized in that the flouring means (63) comprises two superposed brushes (64, 65) rotating about horizontal axes, the upper one of which being a metering brush (64), the lower one being a distributor brush (65) for the flour, wherein the shaft (75) of the distributor brush (65) is driven by the chain wheel (72) of the drum (3) and the chain (73) and supports a chain wheel (74) fixed thereon which drives the chain wheel (74') rotatably placed onto the drive shaft of the metering brush via a further chain (91).

8. Apparatus as claimed in claim 7, characterized in that a base grid (67) is located beneath the metering brush (64), the grid openings of which being changeable in size and/or in number.

9. Apparatus as claimed in any of claims 1 to 8, characterized in that the flouring means (63) is located on the level of the preportioning device (46) formed by two star rollers (47) arranged in said filler run (45) parallel to each other, the axes of said star rollers (47) being situated parallel to the axis of the drum (3), with their arms cutting the dough off, and being controlled in its intermittent rotational movement by the sensor (51) as a function of the volume of dough below the star rollers (47), wherein the flouring means (63) is located on that side of the star rollers (47) which faces the drum (3), with the metering brush (64) preferably being arranged on a higher level and the distribution brush (65) being arranged lower than the star rollers (47).

10. Apparatus as claimed in any of claims 1 to 8, characterized in that the brushes (64, 65) and the star rollers (47) are connected to their drive means by plug connections, and that may each of them be drawn out from the filler run (45) in the same direction after removing one wall (96) thereof.

## Revendications

1. Dispositif pour portionner de la pâte et, le cas échéant, aussi pour pétrir les pièces de pâte portionnées, comprenant un tambour (3) mis en rotation par un dispositif d'entraînement (12), ledit tambour étant pourvu à sa périphérie à distances uniformes d'ouvertures de réception (6, 7), dans lesquelles la pâte est fourrée à partir d'une fosse de remplissage (45) au moyen d'un outil faisant un mouvement de va-et-vient, particulièrement par un coulisseau (50); un dispositif de préportionnement (46) pour la pâte étant disposé dans la fosse de remplissage (45) dont le dispositif d'entraînement est commandé par un détecteur (51) réagissant à la quantité de la pâte qui se trouve dans la fosse de remplissage (45) au dessous du dispositif de préportionnement (46); un dispositif à fariner (63) actionné par un dispositif d'entraînement étant prévu, au moyen duquel de la farine est distribuée sur la pâte qui se trouve dans la fosse de remplissage (45) au dessous du dispositif de préportionnement (46), charactérisé en ce qu'un détecteur (51) est prévu pour la commande du dispositif d'entraînement pour le dispositif à fariner (63), et qui commande ce dispositif d'entraînement en fonction de la quantité de la pâte qui se trouve dans la fosse de remplissage (45) au dessous du dispositif de préportionnement (46).

2. Dispositif selon la revendication 1, charactérisé en ce qu'un seul détecteur (51) est prévu, qui commande non seulement le dispositif d'entraînement du dispositif de préportionnement (46), mais aussi le dispositif d'entraînement pour le dispositif à fariner (63).

3. Dispositif selon la revendication 1 ou 2, charactérisé en ce que le détecteur (51) interromp le dispositif d'entraînement pour le dispositif à fariner (63) avec un délai, de préférence ajustable, en cas d'une quantité de pâte insuffisante pour plusieurs courses de l'outil, particulièrement du coulisseau (50).

4. Dispositif selon l'une des revendications 1 à 4, charactérisé en ce que le dispositif d'entraînement pour le dispositif à fariner (63) présente un dispositif d'accouplement (105), de préférence un accouplement à aimant, qui est commandé par le détecteur, préférablement via un élement de retard ajustable.

5. Dispositif selon la revendication 4, charactérisé en ce que le dispositif à fariner (63) présente au moins une brosse rotative (64) pour le mouvement de la farine, dont l'arbre d' entraînement (76) est actionné en cadence du mouvement intermittent du tambour par le tambour (3) ou par le dispositif d' entraînement de celui-ci, respectivement, avec l'intercallage du dispositif d'accouplement (105).

6. Dispositif selon la revendication 5, charactérisé en ce qu'une roue à chaîne (72) est fixée sur l'arbre (35) du tambour (3) sur laquelle roule une chaîne (73), qui actionne une roue à chaîne (74) posée de manière rotative à l'arbre d'entraînement (76) de la brosse (64), qui est raccordée à un demi-accouplement (77) du dispositif d'accouplement (105), tandis que l' autre demi-accouplement (79) est raccordé à l'arbre d'entraînement (76) de la brosse (64) pour une rotation commune.

7. Dispositif selon la revendication 6, charactérisé en ce que le dispositif à fariner (63) présente deux brosses (64, 65) superposées rotatives autour d'axes horizontales, dont la supérieure est une brosse de dosage (64) et l'inférieure est une brosse de distribution (65) pour la farine, l'arbre (75) de la brosse de distribution (65) étant actionné par la roue à chaîne (72) du tambour (3) au moyen de la chaîne (73) et portant une roue à chaîne (74) fixée à celui-ci qui actionne au moyen d' une autre chaîne la roue à chaîne (74') posée de manière rotative à l'arbre d'entraînement de la brosse de dosage.

8. Dispositif selon la revendication 7, charactérisé en ce qu'au dessous de la brosse de dosage (64) se trouve un plateau en grille (67) dont les ouvertures de grille sont variables en ce qui concerne leur grandeur et/ou leur nombre.

9. Dispositif selon l'une des revendications 1 à 8, charactérisé en ce que le dispositif à fariner (63) est disposé au niveau du dispositif de préportionnement (46) formé par deux rouleaux en étoile (47) disposés parallèlement l'un à l'autre dans la fosse de remplissage (45), les axes de ces rouleaux en étoile (47) étant parallèles à l'axe du tambour (3), leurs bras coupant la pâte, et étant commandés à l'égard de leur mouvement rotatif intermittent par le détecteur en fonction du volume de la pâte qui se trouve au dessous des rouleaux en étoile (47), le dispositif à fariner (63) étant disposé du côté des rouleaux en étoile (47) qui est tourné au tambour (3), de préférence avec la brosse de dosage (64) arrangée plus haute, la brosse de distribution (65) plus bas que les rouleaux en étoile (47).

10. Dispositif selon l'une des revendications 7 à 9, charactérisé en ce que les brosses (64, 65) et les rouleaux en étoile (47) sont raccordés à leurs dispositifs d'entraînement au moyen de connecteurs d'embrochage et sont amovibles en même direction de la fosse de remplissage (45) après l'enlèvement d' une paroi de celui-ci.
